# EUROPEAN PATENT APPLICATION

(11) **EP 3 182 367 A1**
(43) Date of publication of application: **21.06.2017**
(21) Application number: 15307056.0
(22) Date of filing: 18.12.2015
(51) Int. Cl.: G06T 7/00

(54) **APPARATUS AND METHOD FOR GENERATING AND VISUALIZING A 3D MODEL OF AN OBJECT**

(71) Applicant: Thomson Licensing, 92130 Issy-les-Moulineaux (FR)
(72) Inventor: Hyllus, Philipp, 30449 Hannover (DE)
(74) Representative: Huchet, Anne

(57) **Abstract**

An apparatus (10, 20) and a method for generating and visualizing a 3D model of an object are described. The apparatus (10, 20) comprises a camera (11) for capturing a sequence of images of the object or an input (21) for receiving a captured sequence of images of the object. A 3D modeling processor (12, 22) generates (41) an initial 3D model of the object from initial images of the sequence of images and updates (42) the initial 3D model of the object using subsequent images of the sequence of images. An image processor (13, 23) generates overlay images comprising projections of the 3D model into the sequence of images. The apparatus (10, 20) further comprises a display (14) for displaying the overlay images to a user (15) or an output (24) for providing the overlay images to a display (14).

## Description

### FIELD

The present solution relates to an apparatus and a method for generating and visualizing a 3D model of an object. In particular, an apparatus and a method using a sequence of images captured by a camera for generating a 3D model of an object are described.

### BACKGROUND

One possibility to generate a 3D model of an object is to capture a sequence of images of the object with special equipment and to derive the 3D model based on photometric information from the different views of the object.

Accurate models are obtained when a professional hand-held 3D scanner equipped with video and other sensors and lighting sources is used. For scanning the scanner is moved around the object and the captured data are transferred to a computer for processing. A life preview of the 3D model is displayed on a monitor connected to the computer.

A less expensive solution, which does not require a professional scanner, is described by Kang et al. [1]. A commodity hand-held camera is used for image acquisition. Real-time scanning is implemented using a sparse point-based tracker for camera pose estimation and a dense patch-based tracker for dense reconstruction. While the user scans the target object, a model is generated by a computer. The model is composed of local planar patches and is continuously updated and displayed on a monitor for visual feedback.

Another solution, which does not rely on massive processing resources, is described by Kolev et al. [2]. A smartphone is used to generate an incrementally updated model from the video stream captured by the smartphone. A live view of the updated model is displayed on a display of the smartphone.

Unfortunately, the known capturing and feedback techniques are not in all circumstances very intuitive to use.

### SUMMARY

It is an object of the present principles to propose an improved solution for generating and visualizing a 3D model of an object.

According to one aspect, in one embodiment an apparatus configured to generate and visualize a 3D model of an object comprises:
- a camera configured to capture a sequence of images of the object or an input configured to receive a captured sequence of images of the object;
- a 3D modeling processor configured to generate an initial 3D model of the object from initial images of the sequence of images and to update the initial 3D model of the object using subsequent images of the sequence of images;
- an image processor configured to generate overlay images comprising projections of the 3D model into the sequence of images; and
- a display configured to display the overlay images to a user or an output configured to provide the overlay images to a display.

In another embodiment, an apparatus configured to generate and visualize a 3D model of an object comprises a processing device and a memory device having stored therein instructions, which, when executed by the processing device, cause the apparatus to:
- receive a captured sequence of images of the object;
- generate an initial 3D model of the object from initial images of the sequence of images;
- update the initial 3D model of the object using subsequent images of the sequence of images;
- generate overlay images comprising projections of the 3D model into the sequence of images; and
- provide the overlay images to a display.

Accordingly, a method for generating and visualizing a 3D model of an object comprises:
- receiving a captured sequence of images of the object;
- generating an initial 3D model of the object from initial images of the sequence of images;
- updating the initial 3D model of the object using subsequent images of the sequence of images;
- generating overlay images comprising projections of the 3D model into the sequence of images; and
- providing the overlay images to a display.

Also, a computer readable storage medium has stored therein instructions enabling generating and visualizing a 3D model of an object, which, when executed by a computer, cause the computer to:
- receive a captured sequence of images of the object;
- generate an initial 3D model of the object from initial images of the sequence of images;
- update the initial 3D model of the object using subsequent images of the sequence of images;
- generate overlay images comprising projections of the 3D model into the sequence of images; and
- provide the overlay images to a display.

According to the present principles, a life projection of the generated model into the images captured by the camera is displayed to the user. Preferably a virtual reality or augmented reality display equipped with a camera is used for generating the 3D model. In this way the user sees what the camera sees. The 3D model is built from the video stream obtained by the camera. The model or a preview of the model is then overlaid on the current video stream. The solution provides a very natural and intuitive way of capturing data with real-time feedback. It works in a similar way as people do if they want to get an idea of the 3D structure of an object, i.e. they walk around it and go closer where they want to get a more detailed picture. From the overlaid model or the overlaid preview of the model the user can easily see where the 3D model still needs to be improved. He can then provide further data for those parts of the model, e.g. by capturing further images of the object. These further images may be captured with a different orientation of the camera or from a position closer to the object.

In one embodiment, the 3D model of the object is generated and updated from the sequence of images using a Structure-from-Motion algorithm. In this way the camera poses and a sparse point cloud model of the object are reliably extracted using correspondences between feature points found in the images. Preferably, a dense point cloud, a mesh, or a textured mesh is generated building on the sparse point cloud.

In one embodiment, images provided to one eye of the user are slightly blurred. This approach is particularly useful if a monocular video sequence is captured by the camera, as it reduces the eye strain for the user.

In one embodiment, the camera is a stereo camera. In this way true 3D vision is possible also for the video stream, not only for the 3D model. In order to improve the reconstruction, in one embodiment an active lighting or texture projection device is added to the virtual reality device. Texture projection is particularly useful in combination with a stereo camera. In this case the 3D reconstruction is preferably built on depth maps estimated for each stereo pair. The reconstruction is further improved when an infrared scanner is added to the system. Likewise, additional motion sensors may be used to make the camera pose estimation more reliable.

### BRIEF DESCRIPTION OF THE DRAWINGS

- Fig. 1: schematically depicts a first embodiment of an apparatus for generating and visualizing a 3D model of an object;
- Fig. 2: schematically shows a second embodiment of an apparatus for generating and visualizing a 3D model of an object;
- Fig. 3: schematically depicts a third embodiment of an apparatus for generating and visualizing a 3D model of an object;
- Fig. 4: schematically illustrates a method according to an embodiment of the invention for generating and visualizing a 3D model of an object;
- Fig. 5: shows an exemplary video sequence captured by a camera;
- Fig. 6: depicts a sparse 3D point cloud derived from the exemplary video sequence of Fig. 5; and
- Fig. 7: shows an image overlaid with a projected point cloud.

### DETAILED DESCRIPTION OF PREFERRED EMBODIMENTS

For better understanding the principles of embodiments of the invention shall now be explained in more detail in the following description with reference to the figures. It is understood that the invention is not limited to these exemplary embodiments and that specified features can also expediently be combined and/or modified without departing from the scope of the present invention as defined in the appended claims.

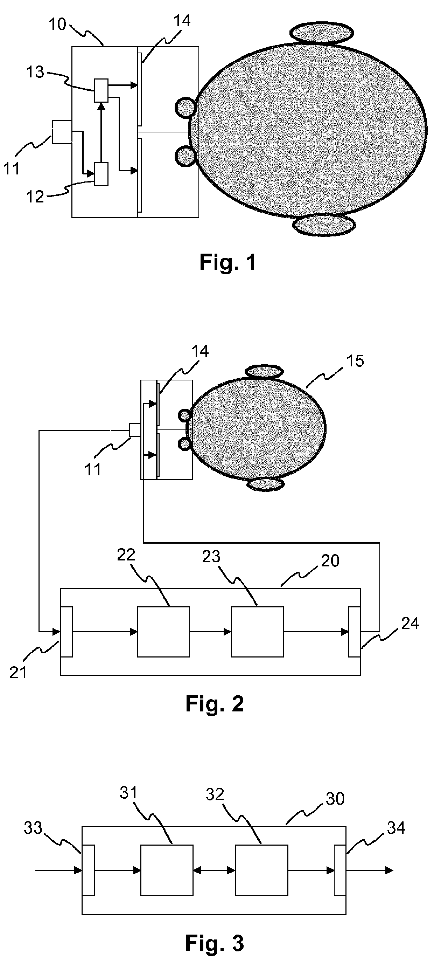

Fig. 1 schematically depicts a first embodiment of an apparatus 10 for generating and visualizing a 3D model of an object. In this embodiment the apparatus 10 is a virtual reality device equipped with a single camera 11 and a display 14. For example, the virtual reality device may be a smartphone, where one part of a display of the smartphone provides images to the left eye and another part of the display provides images to the right eye. Of course virtual reality devices with a dedicated display 14 for each eye may likewise be used. In this embodiment the input video stream captured by the camera 11 does not support 3D vision. Still, the same video can be streamed to both eyes of a user 15 wearing the virtual reality device. Advantageously, in order to reduce the eye strain due to the monocular video sequence, a slightly blurred version of the video stream is provided to one eye, e.g. the right eye. The video stream provided to the display 14 is overlaid with an incrementally updated model of the object. After generating an initial 3D model using the initial images of the input video stream, this initial 3D model is continuously updated using the subsequent images of the video stream. The 3D model this keeps evolving as further images of the video stream become available. The evolving 3D model can be overlaid on top of the video stream in full 3D, i.e. with different images for both eyes. When a stereo camera is used instead of the single camera, true 3D vision is possible also for the video stream.

The model is preferably generated by a 3D modeling processor 12 of the virtual reality device, which generates an initial 3D model of the object from initial images of the sequence of images and updates the initial 3D model of the object using subsequent images of the sequence of images. An image processor 13 generates overlay images comprising projections of the 3D model into the sequence of images.

Fig. 2 schematically shows a second embodiment of an apparatus 20 for generating and visualizing a 3D model of an object, where generating and updating the 3D model is performed by an external processing device, e.g. a computer. In this case the apparatus 20 receives the captured video from the virtual reality device via an input 21. Transmission of the captured video may be wireless or using a wired connection. The 3D model is generated and updated by a 3D modeling processor 22 of the apparatus 20.The updated 3D model is transmitted via an output 24 to the virtual reality device, which then generates the video streams with the overlaid model for both eyes. Alternatively, this step is also done by an image processor 23 of the apparatus 20, which in this case transmits the video streams with the overlaid model back to the virtual reality device. The output 24 may also be combined with the input 21 into a single bidirectional interface. Each of the different units 22, 23 can be embodied as a different processor. Of course, the different units 22, 23 may likewise be fully or partially combined into a single unit or implemented as software running on a processor.

A third embodiment of an apparatus 30 for generating and visualizing a 3D model of an object is illustrated in Fig. 3. The apparatus 30 comprises a processing device 31 and a memory device 32 storing instructions that, when executed, cause the apparatus to receive a captured sequence of images of the object, generate an initial 3D model of the object from initial images of the sequence of images, update the initial 3D model of the object using subsequent images of the sequence of images, generate overlay images comprising projections of the 3D model into the sequence of images, and provide the overlay images to a display. The apparatus 30 further comprises an input 33, e.g. for receiving instructions, user inputs, or data to be processed, and an output 34, e.g. for providing processing results to a display, to a network, or to an external storage. The input 33 and the output 34 may likewise be combined into a single bidirectional interface.

For example, the processing device 31 can be a processor adapted to perform the above stated steps. In an embodiment said adaptation comprises a processor configured to perform these steps.

A processor as used herein may include one or more processing units, such as microprocessors, digital signal processors, or combination thereof.

The memory device 32 may include volatile and/or non-volatile memory regions and storage devices such as hard disk drives, DVD drives. A part of the memory is a non-transitory program storage device readable by the processing device 31, tangibly embodying a program of instructions executable by the processing device 31 to perform program steps as described herein according to the principles of the invention.

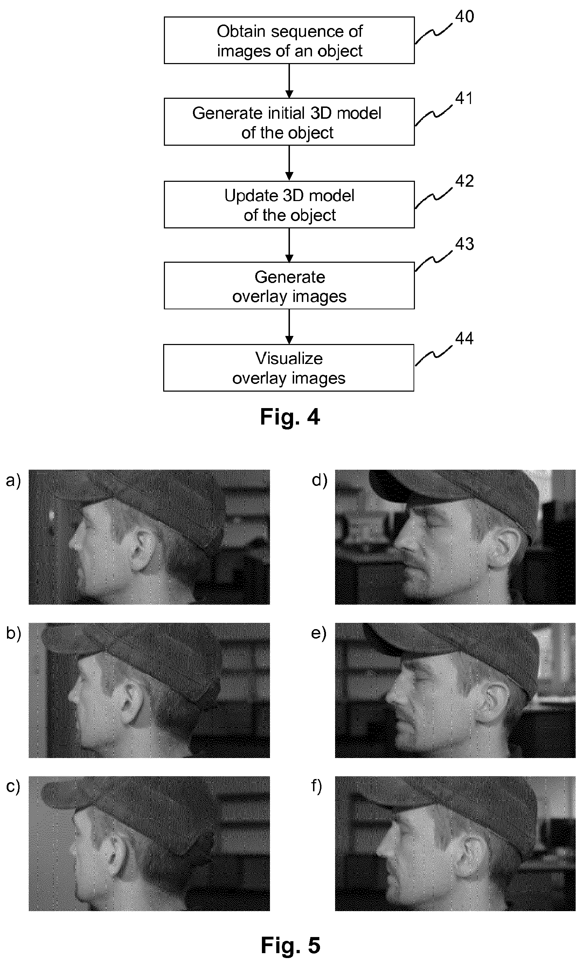

A method according to the present principles for generating and visualizing a 3D model of an object is shown in Fig. 4. After obtaining 40 a sequence of images of the object, e.g. by capturing the images with a camera or receiving a captured sequence of images via an input, an initial 3D model of the object is generated 41 from initial images of the sequence of images. This initial 3D model of the object is subsequently updated 42 using later images of the sequence of images. Using this 3D model overlay images are generated 43, which comprise projections of the 3D model into the sequence of images. These overlay images are then visualized 44, e.g. by displaying them on a display or providing them to a display via an output.

Fig. 5 shows an exemplary video sequence captured by the camera of the virtual reality device. Via correspondences between feature points found in the images, the camera poses, i.e. the camera positions and orientations, and a sparse point cloud model of the object are extracted using a Structure from Motion (SfM) algorithm. For example, a tool such as the Voodoo Camera Tracker [3] may be used for this purpose.

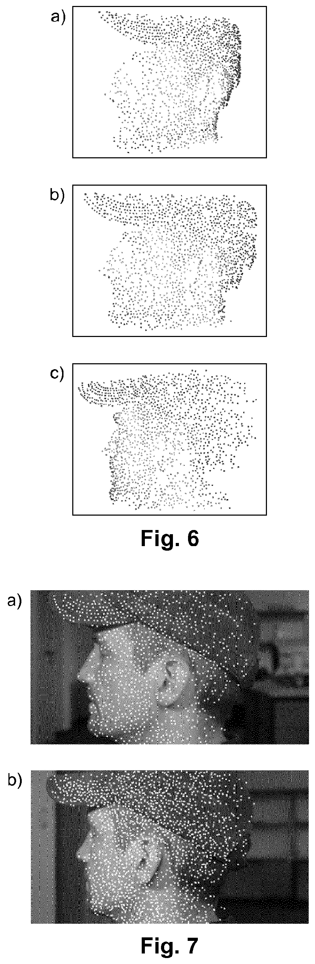

A sparse 3D point cloud derived from the exemplary video sequence of Fig. 5 is depicted in Fig. 6. The sparse point cloud is one example of a reconstructed model of the object. In the figure the sparse point cloud is shown from different viewing angles. When the current position and orientation of the head is known, then the sparse point cloud can be projected into the images used for the user displays, which are derived from the image captured by the camera. Several options exist for generating the images used for the user displays from the captured images and the reconstructed model. The following description assumes a single camera 11 located above the left eye of the user, as shown in Fig. 1 and Fig. 2.

According to a first option, each video image is displayed directly in the display 14 for the left eye. The model is then displayed using the current SfM estimate of the external camera. The projected image is corrected using internal camera parameters obtained from camera calibration. There is no second camera, but a second camera is virtually attached to the apparatus 10 with a fixed position relative to the camera 11. From the internal and external camera parameters and the relative position, the model image for the right eye is computed, which is overlaid onto the (blurred) image for the right eye.

According to a second option, which is similar to the first option, each video image is corrected using the internal camera parameters before displaying it to the left eye. The model is then displayed using the current SfM estimate of the external camera. The projected model image in this case needs no correction.

As a further improvement, for both options the image may be corrected in order to account for a deviation of the camera center from the center of display in the plane defined by the display 14. Such corrections are also applied for the model projection.

An exemplary result of this operation is depicted in Fig. 7. As can be seen, the user sees the generated model of the object on top of the actual images of the object. In this way he can immediately see where the model needs to be improved, e.g. because the point cloud has not sufficient points for parts of the object or because the 3D model does not fit correctly to certain features of the object. In Fig. 7a), for example, it is apparent that the person's ear is not yet captured by the model in sufficient detail. To improve the model the user now has the possibility to provide further images of the ear, i.e. to have a closer look at the ear.

If real-time operation is required, then if the camera records images at a frequency f, the following steps need to be performed in the time period of duration *1*/*f*:
- the SfM algorithm estimates the new camera poses based on the previous estimates and the new image (or the new images for a stereo camera) and updates the sparse model;
- images for the left and the right eye are prepared from the camera image(s); and
- the updated model is projected into the cameras with the updated poses and overlaid with the camera images.

In practice, the SfM algorithm runs in parallel to the other processing. When the sparse model needs to be projected into the cameras at a certain time, then the SfM algorithm returns an estimate, regardless of whether or not it already finished the computation using the last image. If it has not, then the user will experience a misalignment between the object perceived from the images and the overlaid model. However, this is generally not a problem, because a user experiencing this misalignment will naturally move the head more slowly in order to avoid the lag.

If the processing power permits, the SfM algorithm can be extended, for instance by improving the model by computing a dense point cloud model from the images using the camera poses and the sparse models and/or preparing a mesh or a textured mesh from the point cloud. In such case the improved model is projected into the images instead of the sparse model.

In order to improve the reconstruction, in one embodiment an active lighting or texture projection device is added to the head-mounted display. Texture projection is particularly useful in combination with a stereo camera. In this case the 3D reconstruction is preferably built on depth maps estimated for each stereo pair. The 3D reconstruction can be further improved by adding more sensors to the system to aid the computation, for instance an infrared scanner or a Kinect sensor as manufactured by Microsoft. Likewise, the camera pose estimation becomes more reliable when motion sensors, such as the inertial measurement units (IMU) present in state of the art mobile phones, are used.

### CITATIONS

[1] Kang et al.: "Progressive 3D Model Acquisition with a Commodity Hand-held Camera", 2015 IEEE Winter Conference on Applications of Computer Vision (WACV), pp. 270-277.
[2] Kolev et al.: "Turning Mobile Phones into 3D Scanners", Proceedings of the 2014 IEEE Conference on Computer Vision and Pattern Recognition (CVPR), pp. 3946-3953.
[3] http://www.viscoda.com/en/products/non-commercial/voodoo-camera-tracker

## Claims

1. An apparatus (10, 20) for generating and visualizing a 3D model of an object, the apparatus **comprising:**
- a camera (11) configured to capture (40) a sequence of images of the object or an input (21) configured to receive (40) a captured sequence of images of the object;
- a 3D modeling processor (12, 22) configured to generate (41) an initial 3D model of the object from initial images of the sequence of images and to update (42) the initial 3D model of the object using subsequent images of the sequence of images;
- an image processor (13, 23) configured to generate (43) overlay images comprising projections of the 3D model into the sequence of images; and
- a display (14) configured to display (44) the overlay images to a user (15) or an output (24) configured to provide (44) the overlay images to a display (14).

2. The apparatus (10, 20) according to claim 1, **wherein** the 3D modeling processor (12, 22) is configured to generate (41) and to update (42) the 3D model of the object from the sequence of images using a Structure-from-Motion algorithm.

3. The apparatus (10, 20) according to claim 1 or 2, **wherein** the 3D model is one of a sparse point cloud, a dense point cloud, a mesh, or a textured mesh.

4. The apparatus (10, 20) according to one of claims 1 to 3, **wherein** the display (14) comprises a single display with dedicated display areas for a left and a right eye of the user or separate displays for the left and the right eye of the user.

5. The apparatus (10, 20) according to claim 4, **wherein** the image processor (13, 23) is configured to blur images provided to one eye of the user (15).

6. The apparatus (10, 20) according to one of claims 1 to 4, **wherein** the camera (11) is a stereo camera.

7. The apparatus (10, 20) according to claim 6, **further** comprising at least one of a texture projection device, an infrared scanner, and one or more motion sensors.

8. The apparatus (10, 20) according to one of the preceding claims, **wherein** the apparatus is a virtual reality device.

9. The apparatus (10, 20) according to one of the preceding claims, **wherein** the apparatus is configured to update the 3D model based on further images of the sequence of images.

10. An apparatus (30) for generating and visualizing a 3D model of an object, the apparatus comprising a processing device (31) and a memory device (32) having stored therein instructions, which, when executed by the processing device (31), cause the apparatus (30) to:
- receive (40) a captured sequence of images of the object;
- generate (41) an initial 3D model of the object from initial images of the sequence of images;
- update (42) the initial 3D model of the object using subsequent images of the sequence of images;
- generate (43) overlay images comprising projections of the 3D model into the sequence of images; and
- provide (44) the overlay images to a display.

11. A method for generating and visualizing a 3D model of an object, the method **comprising:**
- receiving (40) a captured sequence of images of the object;
- generating (41) an initial 3D model of the object from initial images of the sequence of images;
- updating (42) the initial 3D model of the object using subsequent images of the sequence of images;
- generating (43) overlay images comprising projections of the 3D model into the sequence of images; and
- providing (44) the overlay images to a display.

12. A computer readable non-transitory storage medium having stored therein instructions enabling generating and visualizing a 3D model of an object, which, when executed by a computer, cause the computer to:
- receive (40) a captured sequence of images of the object;
- generate (41) an initial 3D model of the object from initial images of the sequence of images;
- update (42) the initial 3D model of the object using subsequent images of the sequence of images;
- generate (43) overlay images comprising projections of the 3D model into the sequence of images; and
- provide (44) the overlay images to a display.
